# EUROPÄISCHE PATENTSCHRIFT

(11) **EP 0 941 792 B1**
(45) Veröffentlichungstag und Bekanntmachung des Hinweises auf die Patenterteilung: **10.11.2004**
(21) Anmeldenummer: 99810120.8
(22) Anmeldetag: 12.02.1999
(51) Int. Cl.: B23B 31/113

(54) **Werkzeughalter zur Aufnahme eines Bohrwerkzeugs**
Tool holder for a drilling tool
Porte-outil pour un outil de forage

(30) Priorität: 13.03.1998 DE 19810911
(43) Veröffentlichungstag der Anmeldung: 15.09.1999
(73) Patentinhaber: HILTI Aktiengesellschaft, 9494 Schaan (LI)
(72) Erfinder: Ostermeier, Peter, 86911 Diessen (DE); Roth, Peter, 9472 Grabs (CH); Hoyss, Franz, 83646 Wackersberg (DE)
(74) Vertreter: Wildi, Roland

(56) Entgegenhaltungen:
- US-A- 1 766 136
- US-A- 2 219 907
- US-A- 2 526 998
- US-A- 4 184 692
- US-A- 5 522 606

## Beschreibung

Die Erfindung betrifft einen Werkzeughalter gemäss dem Oberbegriff des Patentanspruchs 1 (siehe z. Bsp. US 2 219 907).

Zur Herstellung von Bohrungen in harten Untergründen wie Beton, Gestein, Stahl oder dergleichen ist beispielsweise aus der DE-OS 37 44 091 ein Bohrwerkzeug mit einem rohrförmigen Trägerkörper bekannt, der an seinem bohrrichtungsseitigen Endbereich einen ringförmigen Schneidkörper aufweist und an seinem entgegen der Bohrrichtung weisenden Endbereich mit einem Einsteckende versehen ist. Dieses Einsteckende weist einen Führungsbereich und einen den Führungsbereich radial überragenden Verriegelungsbereich auf. Der Verriegelungsbereich ist mit einem Gewinde versehen, das der axialen Festlegung des Bohrwerkzeuges in dem Werkzeughalter dient. Der Werkzeughalter weist eine axial begrenzt versetzbare Verriegelungshülse mit einem auf das Gewinde des Einsteckendes abgestimmten Gegengewinde auf. Beim Einsetzen des Bohrwerkzeuges in den Werkzeughalter wird durch ein mehrfaches vollständiges Verdrehen der Verriegelungshülse in Schliessrichtung ein Verspannen des Bohrwerkzeuges gegenüber dem Werkzeughalter erreicht. Die Herstellung des Verriegelungsbereiches bedarf aufgrund des Gewindes eines hohen Aufwandes.

Die US 2 219 907 zeigt einen Werkzeughalter zur Aufnahme eines Bohrwerkzeugs mit einem Einsteckende, wobei das Einsteckende einen im wesentlichen zylindrischen Führungsbereich . mit wenigstens einer Führungsfläche und einen den Führungsbereich radial überragenden Verriegelungsbereich aufweist, wobei der Verriegelungsbereich im wesentlichen senkrecht zur Längsachse des Bohrwerkzeuges verlaufende Verriegelungsflächen sowie senkrecht zur Längsachse des Bohrwerkzeuges einen von einem kreisrunden Querschnitt abweichenden Querschnitt aufweist.

Der Erfindung liegt die Aufgabe zugrunde, einen Werkzeughalter für ein Bohrwerkzeug zu schaffen, das wirtschaftlich herstellbar und schnell sowie einfach in dem Werkzeughalter axial festlegbar ist.

Die Lösung dieser Aufgabe erfolgt durch einen Werkzeughalter, welcher die im kennzeichnenden Abschnitt des Patentanspruchs 1 angeführten Merkmale aufweist.

Dank der einfachen Ausgestaltung des Verriegelüngsbereiches ist der Herstellungsaufwand für den Verriegelungsbereich sehr gering.

Aus herstelltechnischen Gründen ist beispielsweise die Aussenkontur des Verriegelungsbereiches mit wenigstens einer Ausnehmung versehen. Damit ein kompliziertes Ausrichten des Bohrwerkzeuges gegenüber dem Werkzeughalter entfallen kann, wenn dieses in den Werkzeughalter eingesetzt wird, weist die Aussenkontur des Verriegelungsbereiches beispielsweise zwei gleichmässig über den Umfang der Aussenkontur des Verriegelungsbereiches verteilte Ausnehmungen auf.

Vorteilhafterweise schliesst sich der Führungsbereich entgegen der Bohrrichtung an den Verriegelungsbereich an. Dadurch kann das Bohrwerkzeug entgegen der Bohrrichtung mit dem Einsteckende voran in einen entsprechenden Werkzeughalter eines Bohrgerätes eingesetzt und in Bohrrichtung aus dieser entnommen werden.

Damit das Bohrwerkzeug von dem Werkzeughalter möglichst genau führbar ist, weist vorzugsweise der Führungsbereich zwei im Abstand voneinander angeordnete Führungsflächen auf.

Ein selbständiges Verdrehen des Bohrwerkzeuges in einem sich in der Verriegelungsstellung befindlichen Werkzeughalter wird vorteilhafterweise mit wenigstens einem Verriegelungselement verhindert, das an wenigstens einer Verriegelungsfläche angeordnet ist. Dieses Verriegelungselement ist beispielsweise eine Vertiefung bzw. ein Vorsprung an der Vetriegelungsfläche oder ein auf der Verriegelungsfläche befestigter Nockenkörper.

Zweckmässigerweise weist der Werkzeughalter einen Trägerkörper mit einer Öffnung, einer sich senkrecht zur Längsachse des Werkzeughalters erstreckenden sowie einer axial gegenüber dem Trägerkörper versetzbaren Spannhülse auf, deren bohrrichtungsseitiger Endbereich eine lichte Weite aufweist, deren Querschnitt dem Querschnitt des Verriegelungsbereiches des Bohrwerkzeuges entspricht und der Querschnitt der Öffnung den Querschnitt des bohrrichtungsseitigen Endbereiches der Spannhülse unter Bildung einer Schulter übersteigt, die von einer, zweiten Gegenfläche der Spannhülse gebildet wird, die einer in Bohrrichtung weisenden ersten Gegenfläche des Trägerkörpers zugewandt ist. Dadurch wird ein schnelles Einsetzen des Bohrwerkzeuges in den Werkzeughalter und ein genaues Führen des Bohrwerkzeuges in dem Werkzeughalter erreicht.

Neben den Verriegelungseigenschaften werden dem Werkzeughalter besonders gute Führungseigenschaften verliehen, indem zweckmässigerweise die Öffnung zwei axial hintereinanderliegende Bereiche aufweist, wobei der von der Mündung der Öffnung ausgehende Bereich unter Bildung der Gegenfläche den Querschnitt des weiteren Bereiches übersteigt.

In dem entgegen der Bohrrichtung liegenden Endbereich der Öffnung des Trägerkörpers ist ein Dichtungselement angeordnet, dass in der Verriegelungsstellung des Werkzeughalters mit dem entgegen der Bohrrichtung weisenden freien Ende eines Bohrwerkzeuges zusammenwirkt, das beispielsweise einen hohlen Trägerkörper aufweist. Damit beim Verdrehen des Bohrwerkzeuges innerhalb des Werkzeughalter eine Reibung zwischen dem Bohrwerkzeug und dem Dichtungselement verhindert werden kann, ist zweckmässigerweise ein Teil des Trägerkörpers als Ring ausgebildet ist, der wenigstens teilweise den von der Mündung der Öffnung ausgehenenden Bereich bildet und gegenüber dem restlichen Teil des Trägerkörpers gegen die Kraft eines Federelementes entgegen der Bohrrichtung versetzbar ist. In der nicht verriegelten Stellung des Werkzeughalters überragt wenigstens ein mit dem Verriegelungsbereich des Bohrwerkzeuges zusammenwirkender Teil dieses Ringes die Gegenfläche des Trägerkörpers, sodass das freie Ende des Führungsbereiches des Bohrwerkzeuges beim Verdrehen des Bohrwerkzeuges in dem Werkzeughalter mit dem Dichtungselement nicht in Berührung kommt.

Um eine seitliche Abstützung des Einsteckendes in dem Werkzeughalter, senkrecht zur radialen Erstreckung des Verriegelungsbereiches, erreichen zu können, ist vorzugsweise der Ring gegenüber dem restlichen Teil des Trägerkörpers in Umfangsrichtung wenigstens teilweise verdrehbar.

Ein selbständiges Verdrehen des Bohrwerkzeuges in dem nicht verriegelten Werkzeughalter aus einer Entnahmestellung bzw. einer Verriegelungsstellung wird zweckmässigerweise dadurch erreicht, dass am Ring wenigstens ein Federelement angeordnet ist, das die Aussenkontur des Ringes überragt und mit der Spannhülse formschlüssig in Verbindung bringbar ist.

Ein Verdrehen des Bohrwerkzeuges gegenüber dem sich in der Verriegelungsstellung befindlichen Werkzeughalter wird vorteilhafterweise dadurch verhindert, dass wenigstens eine der Gegenflächen mit wenigstens einem Verriegelungselement versehen ist. Dieses Verriegelungselement kann beispielsweise gebildet sein von einer Vertiefung, einem Vorsprung an einer der Verriegelungsflächen oder einem auf einer der Gegenfläche befestigbaren Nockenkörper. Dieses Vemegelungselement dient der forrrtschlüssigen Verbindung mit dem im Verriegelungsbereich des Bohrwerkzeuges angeordneten korrespondierenden Verriegelungselement.

Die Erfindung wird anhand von Zeichnungen, die ein Ausführungsbeispiel wiedergeben, näher erläutert. Es zeigen:
- Fig. 1: ein erfindungsgemässes Bohrwerkzeug mit Einsteckende;
- Fig. 2: eine Draufsicht auf das Bohrwerkzeug gemäss Fig. 1;
- Fig. 3: einen erfindungsgemässen Werkzeughalter mit Stützring, vereinfacht und geschnitten dargestellt;
- Fig. 4: einen Schnitt durch den Werkzeughalter in der Entnahmestellung gemäss Fig. 4 entlang der Linie IV-IV, ohne Bohrwerkzeug;
- Fig. 5: einen Schnitt durch den Werkzeughalter in der Ver riegelungsstellung mit eingesetztem Bohrwerkzeug.

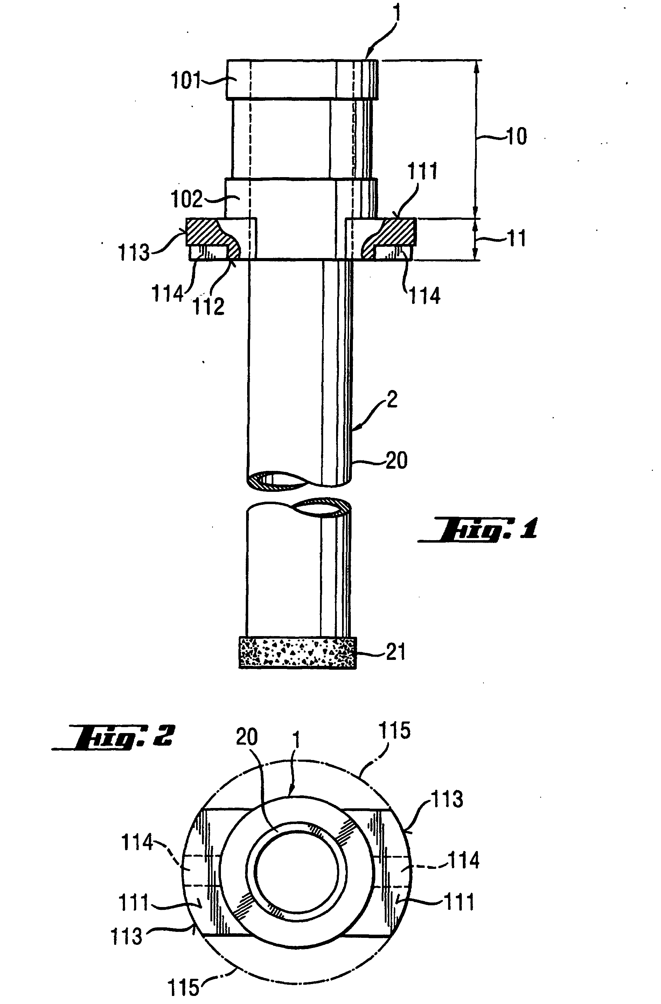

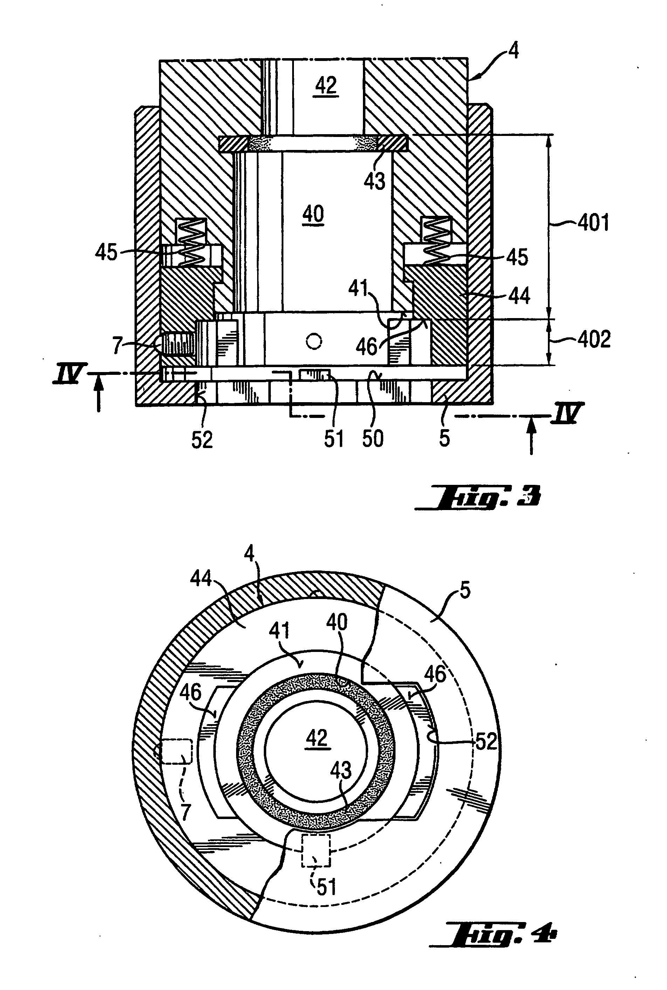

Das in den Fig. 1 und 2 dargestellte Bohrwerkzeug setzt sich zusammen aus einem Bohrabschnitt 2 mit einem rohrförmigen Trägerkörper 20, der an seinem bohrrichtungsseitigen Ende mit einem Schneidring 21 und an seinem der Bohrrichtung entgegengesetzten Endbereich mit einem Einsteckende 1 in Verbindung steht. Das Einsteckende 1 weist einen zylindrischen Führungsbereich 10 und einen Verriegelungsbereich 11 auf, der den Führungsbereich 10 radial überragt. Der sich entgegen der Bohrrichtung an den Verriegelungsbereich 11 anschliessende Führungsbereich 10 weist zwei Führungsflächen 101, 102 auf, die sich über den Umfang des Führungsbereiches 10 erstrecken und im Abstand voneinander angeordnet sind. Der Führungsbereich 10 weist beispielsweise zwei unterschiedliche Durchmesserbereiche auf, wobei in jedem dieser Durchmesserbereiche eine Führungsfläche angeordnet ist und der grössere Durchmesserbereich an den Verriegelungsbereich angrenzt.

Der Verriegelungsbereich 11 weist zwei einander gegenüberliegende, senkrecht zur Längsachse des Bohrwerkzeuges erstreckende Verriegelungsflächen 111, 112 auf, wobei eine erste Verriegelungsfläche 112 in Bohrrichtung und eine zweite Verriegelungsfläche 111 entgegen der Bohrrichtung weist. Die in Bohrrichtung weisende Verriegelungsfläche 112 besitzt zwei einander im wesentlichen gegenüberliegende Verriegelungselemente 114 in Form von zwei Vertiefungen, die beispielsweise zur Aussenkontur 113 des Verriegelungsbereiches 11 hin offen ausgebildet sind.

Wie die Fig. 2 zeigt, weicht der Querschnitt des Verriegelungsbereiches 11 ab von einer kreisrunden Form, da der Querschnitt des Verriegelungsbereiches 11 um zwei einander gegenüberliegende, im wesentlichen kreisabschnittartige Abschnitte 115 reduziert ist. Der in den Fig. 3 bis 5 dargestellte Werkzeughalter dient der Aufnahme eines Bohrwerkzeuges gemäss den Fig. 1 und 2. Die Fig. 3 zeigt einen Trägerkörper 4 mit einer zentralen auf den Führungsbereich 10 des Einsteckendes 1 abgestimmten Öffnung 40, sowie eine den Trägerkörper 4 umgebende Spannhülse 5, die beispielsweise mittels eines nicht dargestellten Werkzeuges gegenüber dem Trägerkörper 4 und gegen die Kraft einer nicht dargestellten Feder in Bohrrichtung versetzbar ist. Die Öffnung 40 weist zwei axial hintereinander liegende Bereiche 401, 402 mit unterschiedlichen Querschnitten auf. Der von der bohrrichtungsseitigen Mündung der Öffnung 40 ausgehende zweite Bereich 402 weist einen grösseren Querschnitt auf als der von der Mündung beabstandete erste Bereich 401. An den ersten Bereich 401 schliesst sich entgegen der Bohrrichtung eine rückwärtige Durchgangsbohrung 42 an.

Im Übergangsbereich zwischen der Öffnung 40 und der rückwärtigen Durchgangsbohrung 42 befindet sich ein scheibenförmig ausgebildetes Dichtungselement 43. Ein Teil des Trägerkörpers 4 ist als Ring 44 ausgebildet ist, der den von der Mündung der Öffnung 40 ausgehenden Bereich 402 bildet und gegenüber dem restlichen Teil des Trägerkörpers 4 gegen die Kraft eines Federelementes 45 entgegen der Bohrrichtung versetzbar und in Umfangsrichtung wenigstens teilweise verdrehbar ist. Der Querschnitt der Öffnung 40 im Bereich 402 entspricht wenigstens dem Querschnitt des bohrrichtungsseitigen Endbereiches der Spannhülte 5. In der nicht verriegelten Stellung des Werkzeughalters überragt eine in Bohrrichtung weisende Anschlagschulter 46 des Ringes 44 die Gegenfläche 41 des Trägerkörpers 4 in Bohrrichtung. Beim Verdrehen eines in dem Werkzeughalter eingesetzen Bohrwerkzeuges wirkt die Anschlagschulter 46 mit der Verriegelungsfläche 111 des Bohrwerkzeuges zusammen und sorgt dafür, dass das freie Ende des Führungsbereiches 10 mit dem Dichtungselement 43 nicht in Berührung kommt. Das Verdrehen des Ringes 44 gegenüber dem restlichen Teil des Trägerkörpers 4 wird mittels nicht näher dargestellter Anschlagflächen und einem Anschlag begrenzt. Beispielsweise ist der Ring 44 gegenüber dem Trägerkörper 4 um 90° verdrehbar.

Am Ring 44 ist wenigstens ein die Aussenkontur des Ringes 44 überragendes Federelement 7 in Form eines Gewindestiftes mit einer federbelasteten Kugel angeordnet. Dieses Federelement 7 wirkt jeweils in der Entnahmestellung und der Verriegelungsstellung mit einer entsprechenden halbkugelförmigen Vertiefung an der Innenkontur der Spannhülse 5 formschlüssig zusammen. Die in Bohrrichtung gemessene Länge des zweiten Bereiches 402 der Öffnung 40 entspricht höchstens der parallel zur Längsachse des Bohrwerkzeuges gemessenen Länge des Verriegelungsbereiches 11.

Die Spannhülse 5 weist im bohrrichtungsseitigen Endbereich einen Boden mit einer zentralen Durchgangsöffnung 52 auf. Der Querschnitt dieser Durchgangsöffnung 52 entspricht dem Querschnitt des Verriegelungsbereiches 11. Der entgegen der Bohrrichtung weisende Umgebungsbereich der Durchgangsöffnung 52 der Spannhülse 5 bildet eine zweite Gegenfläche 50. Von der Gegenfläche 50 ragt entgegen der Bohrrichtung ein Verriegelungselement 51 in Form eines Nockens ab.

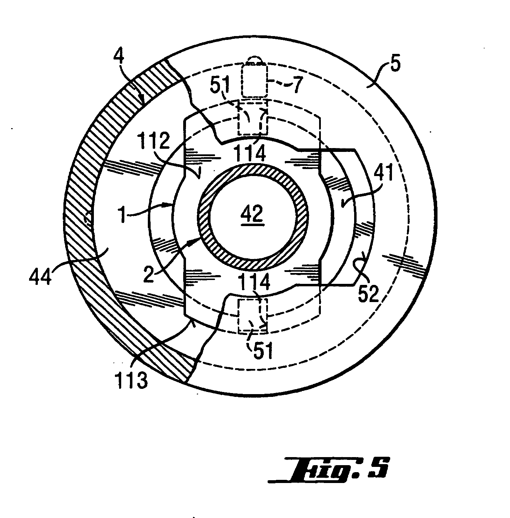

In der Entnahmestellung wie sie die Fig. 4 zeigt ist der Abstand zwischen der ersten Gegenfläche 41 des Trägerkörpers 4 und dem von der zweiten Gegenfläche 50 der Spannhülse 5 abragenden Verriegelungselement 51 grösser als die parallel zur Längsachse des Bohrwerkzeugs gemessene Länge des Verriegelungsbereiches 11.

Der in Fig. 5 dargestellte Ring 44 ist gegenüber der Entnahmestellung gemäss Fig. 4 um 90° verdreht. Die Verriegelungsselemente 51 der Spannhülse 5 und die nicht sichtbaren Verriegelungselemente 114 des Verriegelungsbereiches 11 greifen formschlüssig ineinander.

## Patentansprüche

1. Werkzeughalter zur Aufnahme eines Bohrwerkzeugs mit einem Einsteckende (1), wobei das Einsteckende (1) einen im wesentlichen zylindrischen Führungsbereich (10) mit wenigstens einer Führungsfläche (101, 102) und einen den Führungsbereich (10) radial überragenden Ver riegelungsbereich (11) aufweist, und der Verriegelungsbereich (11) im wesentlichen senkrecht zur Längsachse des Bohrwerkzeuges verlaufende Verriegelungsflächen (111, 112) sowie senkrecht zur Längsachse des Bohrwerkzeuges einen von einem kreisrunden Querschnitt abweichenden Querschnitt aufweist,
mit einem Trägerkörper (4) mit einer Öffnung (40), und einer sich senkrecht zur Längsachse des Werkzeughalters erstreckenden sowie axial gegenüber dem Trägerkörper (4) versetzbaren Spannhülse (5), wobei der Querschnitt der Öffnung (40) geringer ist, als der Querschnitt des bohrrichtungsseitigen Endbereiches der Spannhülse (5) und somit eine Schulter (41, 46) gebildet wird und wobei der Querschnitt des von der Mündung der-Öffnung (40) ausgehenden Bereichs (402) größer ist als der Querschnitt des weiteren Bereiches (401), wodurch eine Gegenfläche (46) gebildet wird, **dadurch gekennzeichnet, dass** ein Teil des Trägerkörpers (4) als Ring (44) ausgebildet ist, der wenigstens teilweise den von der Mündung der Öffnung (40) ausgehenenden Bereich (402) bildet und gegenüber dem restlichen Teil des Trägerkörpers (4) gegen die Kraft eines Federelementes (45) entgegen der Bohrrichtung versetzbar ist, und die Spannhülse (5) gegenüber dem Trägerkörper gegen die Kraft einer Feder in Bohrrichtung versetzbar ist, um in eine Entnahmestellung für das Bohrwerkzeug zu gelangen und eine Reibung zwischen dem Bohrwerkzeug und einem Dichtungselement (43) zu vermeiden, und dass
in einer Verriegelungsstellung diese Feder das Bohrwerkzeug gemeinsam mit dem Ring (44) entgegen der Kraft des Federefementes (45) gegen die Dichtung (43) drückt,

2. Werkzeughalter nach Anspruch 1, **dadurch gekennzeichnet, dass** der Ring (44) gegenüber dem restlichen Teil des Trägerkörpers (4) in Umfangsrichtung wenigstens teilweise verdrehbar ist.

3. Werkzeughalter nach Anspruch 1 oder 2, **dadurch gekennzeichnet, dass** am Ring (44) wenigstens ein Federelement (7) angeordnet ist, das die Aussenkontur des Ringes (44) überragt und mit der Spannhülse (5) formschlüssig in Verbindung bringbar ist.

4. Werkzeughalter nach einem der Ansprüche 1 bis 3, **dadurch gekennzeichnet, dass** wenigstens eine Gegenfläche (50) mit wenigstens einem Verriegelungselement (51) versehen ist.

## Claims

1. Tool holder for a drilling tool, having an insertion end (1) which incorporates a substantially cylindrical guidance zone (10) with at least one guide surface (101, 102) and a locking zone (11) which projects radially over the guidance zone (10), and the locking zone (11) has locking surfaces (111, 112) extending substantially perpendicular to the longitudinal axis of the drilling tool, as well as a cross-section deviating from a circular cross-section perpendicular to the longitudinal axis of the drilling tool,
with a carrier body (4) incorporating an aperture (40), and a tensioning sleeve (5) extending perpendicular to the longitudinal axis of the tool holder and adapted to be transposed axially in relation to the carrier body (4), the cross-section of the aperture (4) being smaller than the cross-section of the terminal zone of the expansion sleeve (5) at the drilling end and thus constituting a shoulder (41, 46), and the cross-section of the zone (402) that begins at the mouth of the aperture (40) being bigger than the cross-section of the remaining zone (401), with the result that a mating surface (46) is formed,
**characterised in that** part of the carrier body (4) is configured as a ring (44) which at least partly constitutes the zone (402) that begins at the mouth of the aperture (40) and is adapted to be transposed in relation to the remaining part of the carrier body (4) against the force of a spring member (45) in the opposite direction from the direction of drilling, and the expansion sleeve (5) is adapted to be transposed in relation to the carrier body against the force of a spring in the direction of drilling, so as to arrive in a position in which the drilling tool can be removed and avoid friction between the drilling tool and a sealing element (43),
and that in one locking position this spring presses the drilling tool along with the ring (44) onto the seal (43) against the force of the spring element (45).

2. Tool holder according to claim 1, **characterised in that** the ring (44) is adapted to be at least partly rotated in a circumferential direction relative to the remainder of the carrier body (4).

3. Tool holder according to claim 1 or 2, **characterised in that** arranged on the ring (44) is at least one spring element (7) which projects over the external contour of the ring (44) and is to be connected in a positive manner to the expansion sleeve (5).

4. Fixing element according to any one of claims 1 to 3, **characterised in that** at least one mating surface (50) is provided with at least one locking element (51).

## Revendications

1. Porte-outil pour recevoir un outil de forage avec une extrémité insérable (1), l'extrémité insérable (1) comportant une zone de guidage sensiblement cylindrique (10), avec au moins une surface de guidage (101, 102), et une zone de verrouillage (11) dépassant radialement de la zone de guidage (10), et la zone de verrouillage (11) présentant des surfaces de verrouillage (111, 112) s'étendant sensiblement perpendiculairement à l'axe longitudinal de l'outil de forage ainsi que, perpendiculairement à l'axe longitudinal de l'outil de forage, une section transversale différente d'une section transversale circulaire, avec un corps porteur (4) pourvu d'une ouverture (40) et avec un manchon de serrage (5) déplaçable axialement par rapport au corps porteur (4), la section transversale de l'ouverture (40) étant inférieure à la section transversale de la zone d'extrémité, côté direction de forage, du manchon de serrage, ce qui forme un épaulement (41, 46), et la section transversale de la zone (402) partant de l'orifice débouchant de l'ouverture (40) étant supérieure à la section transversale de l'autre zone (401), ce qui forme une surface antagoniste (46), **caractérisé en ce qu'**une partie du corps porteur (4) est conformée en anneau (44) qui forme au moins en partie la zone (402) partant de l'orifice débouchant de l'ouverture (40) et qui est déplaçable à l'opposé de la direction de forage par rapport à la partie restante du corps porteur (4) à l'encontre de la force d'un élément de ressort (45), et le manchon de serrage (5) étant déplaçable dans la direction de forage par rapport au corps porteur à l'encontre de la force d'un ressort afin de parvenir à une position de retrait de l'outil de forage et d'éviter une friction entre l'outil de forage et un élément d'étanchéité (43), et **en ce que**, dans une position de verrouillage, ce ressort pousse l'outil de forage, conjointement avec l'anneau (44), contre le joint (43) à l'encontre de la force de l'élément de ressort (45).

2. Porte-outil selon la revendication 1, **caractérisé en ce que** l'anneau (44) est peut être tourné au moins en partie dans la direction circonférentielle par rapport à la partie restante du corps porteur (4).

3. Porte-outil selon la revendication 1 ou 2, **caractérisé en ce que** contre l'anneau (44) est disposé au moins un élément de ressort (7) qui dépasse du contour extérieur de l'anneau (44) et peut être amené en liaison par complémentarité de formes avec le manchon de serrage (5).

4. Porte-outil selon une des revendications 1 à 3, **caractérisé en ce qu'**au moins une surface antagoniste (50) est pourvue d'au moins un élément de verrouillage (51).
